# EUROPÄISCHE PATENTSCHRIFT

(11) **EP 3 069 600 B1**
(45) Veröffentlichungstag und Bekanntmachung des Hinweises auf die Patenterteilung: **07.08.2019**
(21) Anmeldenummer: 16151442.7
(22) Anmeldetag: 15.01.2016
(51) Int. Cl.: A01F 15/07, B60G 9/02, A01D 75/28, A01F 15/08

(54) **ERNTEMASCHINE**
HARVESTER
MOISSONNEUSE

(30) Priorität: 20.03.2015 DE 102015003701; 13.05.2015 DE 102015006221
(43) Veröffentlichungstag der Anmeldung: 21.09.2016
(73) Patentinhaber: PÖTTINGER Landtechnik GmbH, 4710 Grieskirchen (AT)
(72) Erfinder: Baldinger, Markus, 4084 St. Agatha (AT); Pöttinger, Klaus, 4710 Grieskirchen (AT); Prechtl, Wolfgang, 4722 Bruckwaasen (AT); Preimeß, Hans-Jörg, 9811 Lendorf (AT); Zweimüller, Manuel, 4753 Taiskirchen (AT); Kleesadl, Johann, 4181 Oberneukirchen (AT); Lackner, Christian, 4060 Leonding (AT); Kraft, Andreas, 4752 Riedau (AT); Hinterhölzl, Christoph, 4084 St. Agatha (AT); Altmann, Johannes, 4720 Kallham (AT)
(74) Vertreter: Thoma, Michael

(56) Entgegenhaltungen:
- EP-A1- 1 114 577
- EP-A1- 2 622 955
- EP-A2- 2 275 287
- DE-U1- 29 911 916
- FR-A1- 2 839 937
- GB-A- 1 189 705
- US-A- 4 602 800

## Beschreibung

Die vorliegende Erfindung betrifft eine landwirtschaftliche Erntemaschine wie Ladewagen oder Ballenpresse zum Anbau an einen Schlepper, mit einem Maschinenrahmen, der zumindest ein Funktionsaggregat trägt und durch ein Fahrwerk am Boden abgestützt ist.

Bei solchen Erntemaschinen können die am Maschinenrahmen angeordneten Funktionsaggregate einen Aufbau wie bspw. einen Erntegutspeicher mit einem Kratzboden und ggf. weiteren Funktionskomponenten wie einem Abladedosierer und dgl. umfassen, wenn es sich um einen Ladewagen handelt. Bei Ausbildung der Erntemaschine als Ballenpresse können als Funktionsaggregat ein Ballenformer zum Formen des aufgesammelten Ernteguts zu Ballen, ein dem Ballenformer nachgeordneter Wickler zum Umwickeln des Ballens mit einem Netz, einer Folie oder dergleichen, sowie ggf. ein zwischengeschalteter Übergabeförderer vorgesehen sein. Ferner kann bei solchen Erntemaschinen auch ein Aufsammler zum Aufsammeln von Erntegut vom Boden bspw. in Form einer Pickup mit einem nachgeschalteten Förderrotor und ggf. einem diesem zugeordneten Schneidwerk am Maschinenrahmen aufgehängt sein.

Bei Ballenpressen ist dem Ballenformer regelmäßig ein Wickler nachgeordnet, der einen fertig geformten Ballen mit einem Netz, einer Folie oder einem anderen Wickelmaterial wie beispielsweise einer Schnur oder einer Membran oder dergleichen umwickelt. Solche Wickler können mit dem Ballenformer zusammen auf einem gemeinsamen Maschinenrahmen oder einem Chassisteil angeordnet sein, wobei der Wickler an einer Auswurföffnung des Ballenformers angeordnet sein kann, um die aus der Ballenformkammer ausgeworfenen Erntegutballen zu übernehmen, wobei ggf. zwischen dem Ballenformer und dem Wickler noch ein Übergabeförderer vorgesehen sein kann.

In unebenem Gelände kann es hierbei zu verschiedenen Problemen mit diesen Funktionsaggregaten kommen. Beispielsweise kann es bei einem Ladewagen dazu kommen, dass bei zu starker Schrägneigung des Aufbaus der Kratzboden das gespeicherte Erntegut nicht mehr gleichmäßig im Erntegutspeicher verteilen kann oder sich der Erntegutstock im Speicher einseitig aufbaut. Ist der Erntegutspeicher bereits recht voll bzw. hoch befüllt, kann es aufgrund des hohen Schwerpunkts auch zu Fahrstabilitäts- und Spurhalteproblemen oder gar zu einem Kipprisiko kommen. Bei Ballenpressen kann es bei stärkeren Hangneigungen passieren, dass der Ballen am Wickler nicht in der gewünschten Lage zu liegen kommt, da der Ballen durch Hangabtriebskräfte in seiner Lage beeinflusst wird. Dabei kann der Übergabevorgang an den Wickler selbst gestört werden oder der Ballen kann nach Übergabe an den Wickler auf dem Wicklertisch verrutschen, so dass er dort nicht mehr die gewünschte Lage einnimmt. Als Folge hieraus kommt es zu Störungen beim Wickelvorgang, wobei der Ballen nicht mehr ordnungsgemäß umwickelt werden oder der Wickelvorgang erst gar nicht gestartet werden kann.

Es wurde daher bereits angedacht, die Arbeitsgeschwindigkeiten der Funktionsaggregate bei Hangfahrten zu verlangsamen oder die Funktionsaggregate auch erst dann wieder in Betrieb zu nehmen, bspw. den Kratzboden anzustellen oder den Wickelvorgang zu beginnen, wenn sich die Erntemaschine wieder in ebenem Gelände befindet. Hierdurch wird jedoch die Leistung der Erntemaschine spürbar beeinträchtigt. Zudem kann es bei großflächig geneigtem Gelände dazu kommen, dass die eigentliche Feldbearbeitung unterbrochen und die geneigte Fläche verlassen werden muss, um in entfernterem, ebenem Gelände die bei Hangneigungen problematischen Arbeitsfunktionen ausführen zu können.

Aus der Schrift DE 299 11 916 U1 ist eine Ballenpresse bekannt, bei der der Wickeltisch des Wicklers verkippt bzw. geneigt und somit eine sich in unebenem Gelände eigentlich einstellende Neigung gegenüber einer horizontalen Ebene ausgeglichen werden kann. Hierzu ist der Wickeltisch um eine liegende Querachse schwenkbar gelagert und entgegen der Hangneigung verkippbar. Hierdurch kann auch bei steileren Bergauf- oder Bergabfahrten der Ballen auf einem eben ausgerichteten Wickeltisch umwickelt werden. Allerdings verbleibt die Problematik, dass ein Ballen bei Schrägfahrten näherungsweise entlang einer Höhenlinie eines Hangs auf dem Wickeltisch verrutschen bzw. nicht verlässlich an den Wickler übergeben werden kann, da nur Hangneigungen in Fahrtrichtung, d.h. Steigungen und Gefälle ausgeglichen werden können. Zudem kann der Wickeltisch in seiner Ausrichtung nicht schnell genug an sich ändernde Hangneigungen angepasst werden.

Aus der Schrift DE 10 2013 108 246 A1 ist ferner eine Rundballenpresse bekannt, bei der der Ballenformer bzw. dessen Ballenformkammer in der Höhe gegenüber dem Boden verstellt werden kann. Hierzu ist eine Knickdeichsel in Verbindung mit einer von der Fahrwerksachse deutlich beabstandeten Anordnung der Ballenformkammer vorgesehen, so dass ein Abknicken der Knickdeichsel eine Höhenverstellung der Ballenformkammer bewirkt. Diese Höhenverstellbarkeit soll dazu genutzt werden, beim Auswerfen eines Ballens ein ausreichendes Gefälle zum Wickeltisch sicherzustellen und eine Kollision der aufklappbaren Ballenformkammer-Rückwand mit dem Wickler zu vermeiden. Die zuvor geschilderten Probleme hinsichtlich der Ballenübergabe und des Wickelvorgangs bei übermäßigen Hangneigungen wird hierbei jedoch nicht gelöst.

Aus der Schrift GB 1189705 A ist ein Kartoffeltransportwagen bekannt, bei dem der Maschinenrahmen gegenüber dem Fahrwerk durch Hydraulikzylinder verkippbar ist, wobei die Hydraulikzylinder über Ventile betätigt werden, die durch eine sich im Lot ausrichtende Pendelvorrichtung angesteuert werden.

Der vorliegenden Erfindung liegt daher die Aufgabe zugrunde, eine verbesserte Erntemaschine der eingangs genannten Art zu schaffen, die Nachteile des Standes der Technik vermeidet und Letzteren in vorteilhafter Weise weiterbildet. Insbesondere soll ein störungsfreies Wickeln der Ballen auch bei größeren Hangneigungen ermöglicht werden, ohne hierfür einen kompakten, einfachen Maschinenaufbau opfern zu müssen.

Erfindungsgemäß wird die genannte Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, einen Hangneigungsausgleich zumindest quer zur Fahrtrichtung vorzunehmen, hierzu die Neigung der Maschine mit einem elektronischen Neigungssensor zu erfassen und eine Neige-Aktorik zum Verkippen des Erntemaschinen-Aufbaus bzw. Oberbaus automatisch anhand des Neigungssensor-Signals zu steuern, um eine zumindest teilweise Kompensation der Hangneigung zu erzielen. Erfindungsgemäß umfasst die Erntemaschine zumindest einen elektronischen Neigungssensor zum Erfassen einer Neigung des Maschinenrahmens gegenüber einer horizontalen Ausrichtung, zumindest einen Neigungs-Stellaktor zum Verkippen des Maschinenrahmens gegenüber dem Fahrwerk, sowie eine elektronische Steuervorrichtung zum Betätigen des zumindest einen Neigungs-Stellaktors in Abhängigkeit der von dem elektronischen Neigungssensor erfassten Neigung des Maschinenrahmens derart, dass die Neigung des Maschinenrahmens gegenüber der genannten horizontalen Ausrichtung möglichst reduziert wird. Durch ein automatisches, kontinuierlich an die Hangneigung angepasstes gegenläufiges Verkippen des Erntemaschinen-Aufbaus können Beeinträchtigungen der Funktionsaggregate weitgehend vermieden und das Fahrverhalten und der Nachlauf der Erntemaschine bei Hangfahrten stabilisiert werden. Durch Verwendung eines elektronischen Neigungssensors können Veränderungen in der Hangneigung rasch erfasst und hierdurch ein schnelles Ansprechen der Hangneigungsausgleichseinrichtung erreicht werden, wodurch Hanglagen mit deutlich höheren Fahrgeschwindigkeiten bearbeitet werden können.

Der vorgenannte Neigungssensor zum Erfassen der Neigung der Erntemaschine kann grundsätzlich verschieden ausgebildet sein. Beispielsweise kann der Neigungssensor eine in einem schalenförmigen Käfig angeordnete Kugel umfassen, deren Position in der Käfigschale elektronisch erfasst wird, oder ein Federmassesystem umfassen, bei dem die Auslenkung einer kleinen Testmasse in Abhängigkeit von der Lage elektronisch erfasst wird.

Insbesondere kann in vorteilhafter Ausbildung der Erfindung ein elektronischer Neigungssensor vorgesehen sein, der eine dielektrische Flüssigkeit enthält, deren Lage bzw. Pegel in einem Aufnahmebehältnis kapazitiv oder induktiv erfasst werden kann. Ein solcher Neigungssensor hat ein äußerst rasches Ansprechverhalten und kann auch bei holprigem Feldbetrieb verlässlich die Neigung der Erntemaschine erfassen.

In vorteilhafter Weiterbildung der Erfindung kann der zumindest eine Neigungssensor dabei mehrachsig arbeitend ausgebildet sein und/oder es können mehrere Neigungssensoren zur mehrachsigen Neigungserfassung vorgesehen sein, um die Neigung des Maschinenraums im Raum bezüglich mehrerer Achsen erfassen zu können. Insbesondere kann mittels des zumindest einen Neigungssensors eine Querneigung des Maschinenaufbaus nach rechts und links quer zur Fahrtrichtung und eine Nickneigung nach vorne und hinten in Fahrtrichtung jeweils gegenüber einer Vertikalen erfasst werden.

Gegebenenfalls kann aber auch nur mit einem oder mehreren einachsigen Neigungssensoren gearbeitet werden, die nur eine Neigung in einer Ebene erfassen. Dies kann insbesondere dann ausreichend sein, wenn die Erntemaschine nur einen einachsigen Neigungsausgleich vorsieht, insbesondere in einer Ebene senkrecht zur Fahrtrichtung bzw. ein Verkippen des Maschinenaufbaus quer zur Fahrtrichtung nach rechts und links. Der einachsige Neigungssensor wird dann vorteilhafterweise derart angeordnet, dass eine Neigung des Maschinenrahmens quer zur Fahrtrichtung nach rechts und links erfasst wird.

Der zumindest eine Neigungssensor kann hierbei grundsätzlich an verschiedener Stelle der Erntemaschine angebracht sein, beispielsweise unmittelbar am Maschinenrahmen oder einem damit verbundenen Abschnitt des Maschinenaufbaus, wobei der Neigungssensor vorteilhafterweise im Inneren eines Gehäuseteils aufgenommen sein kann, um den Sensor vor äußeren Beschädigungen zu schützen.

Der zumindest eine Neigungssensor kann hierbei eine Abweichung der Ausrichtung des Maschinenrahmens gegenüber der Vertikalen und/oder gegenüber einer horizontalen Ebene erfassen. Die elektronische Steuervorrichtung steuert dabei die Neigungs-Stellaktoren vorteilhafterweise im Sinne einer Regelung derart an, dass die erfasste Abweichung gegen Null geht, d.h. der Maschinenrahmen möglichst in seine Sollausrichtung wie auf horizontalem Feld kommt, soweit dies vorbestimmte Verkippungsgrenzen für die Verkippung des Maschinenrahmens gegenüber dem Fahrwerk und/oder anderer Begrenzungen wie die Bodenfreiheit zulassen.

Um Neigungen bei Hangquerfahrten zu reduzieren, umfasst die Neigungs-Stellaktorik zumindest einen Querneigungs-Stellaktor zum Verkippen des Maschinenaufbaus bzw. des Maschinenrahmens mit dem darauf angeordneten Funktionsaggregat entgegen einer Hangneigung quer zur Fahrtrichtung nach rechts und links. Durch die genannte Querverkippung kann der Maschinen-Aufbau insbesondere bergwärts geneigt werden. Hierdurch können Hangneigungen bei Schrägfahrten bzw. Fahrten näherungsweise entlang von Höhenlinien zumindest teilweise kompensiert oder reduziert werden, wodurch Störungen im Arbeitsbetrieb der Funktionsaggregate auch bei hangparallelen Fahrten besser vermieden werden können.

Der genannte Querneigungsausgleich bzw. das genannte Verkippen quer zur Fahrtrichtung kann dabei in Weiterbildung der Erfindung zusätzlich zu einer Verkippbarkeit des Maschinenaufbaus in Fahrtrichtung vorgesehen sein. Vorteilhafterweise kann die genannte Hangausgleichseinrichtung auch zumindest einen Nickneigungs-Stellaktor zum Verkippen des Maschinenrahmens um eine liegende, quer zur Fahrtrichtung ausgerichtete Nickachse aufweisen. Durch einen solchen zusätzlichen Hangneigungsausgleich auch in Fahrtrichtung können aus einer übermäßigen Neigung des Funktionsaggregats resultierende Probleme auch bei Bergauf- oder Bergabfahrten vermieden werden.

Vorteilhafterweise sind dabei die Neigungs-Stellaktoren derart angeordnet, dass ein gemeinsames Verkippen aller auf dem Maschinenrahmen angeordneten bzw. daran befestigten Funktionsaggregate erfolgt, so dass beim Neigungsausgleich zumindest kein größerer Winkelversatz zwischen verschiedenen Funktionsaggregaten wie Ballenformer und Wickler entsteht. Dies verbessert beispielsweise die Übergabe eines geformten Ballens vom Ballenformer an den Wickler. Zudem vereinfacht sich der Aufbau der Erntemaschine und insbesondere der Hangausgleichseinrichtung beträchtlich.

Insbesondere kann in vorteilhafter Weiterbildung der Erfindung vorgesehen sein, dass die vorgenannten Querneigungs- und/oder Nickneigungs-Stellaktoren direkt oder indirekt den Maschinenrahmen oder ein Chassisteil des Maschinenrahmens, das die Funktionsaggregate wie Ballenformer und Wickler trägt, verkippen, um einen Neigungsausgleich herbeizuführen.

Die vorgenannte Verkippbarkeit des Maschinenrahmens kann hierbei grundsätzlich in verschiedener Art und Weise erreicht werden. In vorteilhafter Weiterbildung der Erfindung kann ein Neigungsausgleich quer zur Fahrtrichtung bzw. ein Verkippen des Maschinenrahmens quer zur Fahrtrichtung mit Hilfe eines höhenverstellbaren Fahrwerks erzielt werden, bei dem eine rechte Fahrwerksseite und/oder eine linke Fahrwerksseite unabhängig von und/oder gegenläufig zu einer jeweils anderen Fahrwerksseite höhenverstellt werden kann. Hierbei kann bereits ausreichend sein, wenn nur eine Fahrwerksseite höhenverstellbar ausgebildet ist. Wird beispielsweise eine rechte Fahrwerksseite tiefer ausgefahren, wird die Erntemaschine nach links verkippt, während die Erntemaschine nach rechts verkippt, wenn das genannte rechtsseitige Fahrwerksteil höher eingezogen wird. Vorteilhafterweise können jedoch beide Fahrwerksseiten höhenverstellbar ausgebildet sein, um unabhängig von der Orientierung der Hangneigung ohne Kollisionsprobleme bzw. mit ausreichender Bodenfreiheit einen Neigungsausgleich vornehmen zu können. Die Steuervorrichtung kann dabei vorteilhafterweise die jeweiligen Stellaktoren so ansteuern, dass ein gegenläufiges Verstellen der rechten und linken Fahrwerksseiten erfolgt, also bspw. ein linkes Fahrwerksteil aus- und eine rechtes Fahrwerksteil einfährt.

Insbesondere kann in Weiterbildung der Erfindung ein Bogey-Fahrwerk vorgesehen sein, bei dem zwei Radachsen nach Art einer Zwillingsachse zusammengefasst und mittels schwenkbarer Achsträger verschwenkbar sein können. Durch Auseinanderschwenken und/oder Zusammenschwenken der Radachsen werden die Räder gegenüber dem Chassisteil, an dem die Achsträger angelenkt sind, höhenverstellt.

Der vorgenannte Querneigungs-Stellaktor der Hangneigungsausgleichseinrichtung kann hierbei ein Schwenkaktor zum Verschwenken der genannten Achsträger sein und beispielsweise in Form eines Druckmittelzylinders an den genannten schwenkbaren Achsträgern angreifen. Insbesondere können die Achsträger an einer gemeinsamen oder zwei separaten, liegend quer zur Fahrtrichtung verlaufenden Schwenkachsen gelagert und durch den Druckmittelzylinder, der an jedem der Achsträger einen von dessen Schwenkachse beabstandeten, gelenkigen Anlenkpunkt besitzen kann, miteinander verbunden sein. Hierdurch kann mit einem einfachen linearen Stellaktor durch Ein- und Ausfahren die Höhe des Bogey-Fahrwerks verstellt werden.

Ein solches höhenverstellbares Fahrwerk kann hierbei nicht nur zum Ausgleichen oder Reduzieren von Querneigungen bzw. zum Verkippen des Maschinenrahmens und dessen Aufbau quer zur Fahrtrichtung genutzt werden, sondern kann auch dazu dienen, durch gleichläufiges Höhenverstellen der rechten und linken Fahrwerksseite kurzfristig die Bodenfreiheit zu erhöhen, beispielsweise beim Überfahren von Kuppen oder beim Durchfahren von Senken.

Insbesondere kann eine solche Fahrwerks-Höhenverstellung auch dazu genutzt werden, um Nickneigungen der Erntemaschinen bei Bergauf- und/oder Bergabfahrten auszugleichen bzw. zu reduzieren, insbesondere bei einer Ausbildung der Erntemaschine als Anbaugerät, das über eine Deichsel oder eine andere Anbauvorrichtung an einen Schlepper angebaut werden kann. Betrachtet man den Anbaupunkt bzw. den Deichselanlenkpunkt am Schlepper als höhenfest, kann durch ein Nach-unten-Ausfahren des Fahrwerks und damit ein Höherstellen des Chassis bzw. Maschinenrahmens eine Hangneigung bei Bergauffahrten reduziert werden, während umgekehrt bei Bergabfahrten durch ein Absenken des Chassis, d.h. ein Nach-oben-Einziehen des Fahrwerks eine entsprechende Hangneigung ausgeglichen werden kann. Das höhenverstellbare Fahrwerk erfüllt dabei eine Doppelfunktion. Durch einseitiges oder gegenläufiges Höhenverstellen der Fahrwerksseiten bewirkt es eine Kompensation von Querneigungen. Durch gemeinsames, beidseitiges Höhenverstellen bewirkt es eine Kompensation von Längsneigungen.

Alternativ oder zusätzlich kann zum Ausgleich von Nickneigungen bei Bergauf- und Bergabfahrten auch eine Knickdeichsel vorgesehen sein, mittels derer der Maschinenrahmen um eine liegende, quer zur Fahrtrichtung ausgerichtete Nickachse geneigt werden kann, um Hangneigungen bei Bergauf- und Bergabfahrten auszugleichen. Der vorgenannte Nickneigungs-Stellaktor der Hangausgleichseinrichtung kann hierbei ein die Knickdeichsel verschwenkender Schwenkaktor, beispielsweise in Form eines Druckmittelzylinders sein.

Alternativ oder zusätzlich zu der vorgenannten Höhenverstellbarkeit des Fahrwerks kann ein zumindest teilweiser Ausgleich von Hangneigungen quer zur Fahrtrichtung auch dadurch erreicht werden, dass der Maschinenrahmen bzw. ein das Funktionsaggregat tragendes Chassisoberteil gegenüber einem vom Fahrwerk am Boden abgestützten Chassisunterteil um eine liegende, in Fahrtrichtung weisende Kippachse verkippbar gelagert ist. Hierbei kann beispielsweise ein starres oder zumindest nicht höhenverstellbares Fahrwerk Verwendung finden, durch das ein Unterteil des Maschinenrahmens bzw. ein unteres Chassisteil immer bodenparallel geführt wird. Ein Neigungsausgleich wird durch Verkippen des Maschinenrahmens bzw. dessen Rahmenoberteils gegenüber diesem unteren Chassisteil herbeigeführt.

Hierbei kann eine feste, vorzugsweise mittig angeordnete Kippachse vorgesehen sein, die sich liegend etwa in Fahrtrichtung erstreckt, so dass sich auf gegenüberliegenden Seiten der genannten Kippachse befindliche Abschnitte gegenläufig absenken und anheben. Die genannte Kippachse kann hierbei insbesondere in einer vertikalen Längsmittelebene der Erntemaschine angeordnet sein. Mit einer solchen festen, mittigen Kippachse kann ein besonders schnelles Ansprechen der Neigungsausgleichssteuerung erzielt werden. Ein relativ kleiner Stellweg des Neigungs-Aktors wird in eine größere Neigebewegung des Maschinenrahmens und des Maschinenaufbaus umgesetzt. Alternativ oder zusätzlich zu einer chassisfesten Kippachse können auch zwei quer zur Fahrtrichtung voneinander beabstandete Kippachsen vorgesehen sein, die sich liegend etwa in Fahrtrichtung erstrecken können und gegenüber dem Chassis verschiebbar bzw. bewegbar gelagert sein können, insbesondere um Schwenkbewegungen jeweils um die andere Kippachse zuzulassen. Beispielsweise kann der Maschinenrahmen und/oder ein die Funktionskomponenten tragendes Chassisteil der Erntemaschine mit in Fahrtrichtung betrachtet rechts und links liegenden Abschnitten gelenkig an Hubaktoren angelenkt sein, so dass wahlweise durch Beaufschlagung eines rechten Hubaktors oder eines linken Hubaktors ein Verkippen um den linken Abschnitt oder um den rechten Abschnitt herbeiführbar ist. Die gelenkige Anlenkung der Hubaktoren kann hierbei jeweils eine liegende, in Fahrtrichtung weisende Kippachse rechts und links an Randabschnitten des genannten Chassisteiles bilden.

Das Verkippen des Maschinenrahmens entgegen der jeweiligen Hangneigung, um eine möglichst horizontale Ausrichtung zu erreichen, kann von der Steuervorrichtung halbautomatisch oder vollautomatisch gesteuert werden. Bei einer halbautomatischen Steuerung kann beispielsweise ein Auslöse-Signal, das von einem Maschinenführer eingebbar ist, abgewartet werden, bspw. um nur in bestimmten Betriebssituationen oder bei bestimmten Hangneigungssituationen den Neigungsausgleich in Gang zu setzen.

Insbesondere bei vollautomatischer Ausbildung kann die Steuervorrichtung weitere Betriebsparameter der Erntemaschine, insbesondere einen Betriebszustandsparameter des zumindest einen Funktionsaggregats berücksichtigen, und die Stell-Aktorik zum Hangneigungsausgleich in Abhängigkeit des genannten weiteren Betriebsparameters ansteuern, insbesondere derart, dass der Maschinenrahmen nur vorübergehend entgegen der Hangneigung verkippt wird, wenn dies für die Funktion des Funktionsaggregats notwendig ist. Insbesondere kann die genannte Steuervorrichtung einen Betätiger zum nur zeitlich begrenzten Verkippen des Maschinenrahmens während eines Zeitfensters, in dem das Funktionsaggregat eine oder mehrere neigungskritische Funktionen ausführt, aufweisen, während außerhalb dieses Zeitfensters kein Neigungsausgleich ausgeführt zu werden braucht.

Ist die Erntemaschine bspw. als Ballenpresse ausgebildet, kann ein nur zeitlich begrenztes Verkippen des Ballenformers und/oder des Wicklers während einer Ballenübergabe vom Ballenformer an den Wickler und/oder während eines Ballenwickelvorganges vorgesehen werden. Wenn der Wickler inaktiv ist und/oder der Ballenformer noch keinen Ballen auswirft und/oder sich noch nicht dem Ende eines Ballenformzyklus nähert, kann der genannte Betätiger die Hangneigungsausgleichseinrichtung deaktivieren und/oder noch kein Verkippen herbeiführen und/oder den Ballenformer und/oder Wickler in einer hangparallelen Ausrichtung halten. Wird jedoch die Wickelvorrichtung aktiviert und/oder eine Ballenübergabe vom Ballenformer an den Wickler initiiert und/oder nähert sich der Ballenformer dem Ende eines Ballenformzyklus, kann der Betätiger die Hangneigungsausgleichseinrichtung betätigen, um den Ballenformer und den Wickler entgegen der Hangneigung zu verkippen, um einen Ausgleich der Hangneigung zu erzielen. Sobald der Wickelvorgang abgeschlossen ist, kann das Verkippen des Ballenformers und/oder Wicklers wieder rückgängig gemacht werden, um die Übergabe des Ernteguts vom Aufsammler an den Ballenformer möglichst wenig zu behindern.

Die konkreten Zeitpunkte, zu denen die genannte Steuervorrichtung das Verkippen zum Zwecke des Hangneigungsausgleichs veranlasst und wieder beendet, können gegenüber den vorgenannten Betriebszeitpunkten zeitlich versetzt sein, beispielsweise in Form eines bestimmten Vorlaufs, der die Betätigung der Neigungs-Stellaktoren ermöglicht und/oder in Form eines gewissen Nachlaufs gegenüber dem genannten Zeitpunkt der Beendigung der Funktion des Funktionsaggregats, um eine gewisse Sicherheitstoleranz zu erzielen.

Alternativ zu einer solchen nur zeitlich begrenzten Verkippung zum Neigungsausgleich kann die Steuervorrichtung jedoch auch kontinuierlich arbeiten bzw. die auftretende Hangneigung stets ausgleichen und die Neigungs-Stellaktoren während des Betriebs nicht nur in bestimmten Zeitfenstern ansteuern. Berücksichtigt die Steuervorrichtung dabei über das Signal des Neigungssensors hinaus noch weitere Betriebsparameter der Erntemaschine, insbesondere einen oder mehrere Betriebszustandsparameter des zumindest einen Funktionsaggregats, kann dies beispielsweise auch dergestalt ausgeführt werden, dass die Steuervorrichtung die Stärke der Gegenneigung bzw. den Grad des Neigungsausgleichs an den Betriebszustand der Erntemaschine anpasst. Wird beispielsweise mit einem Ladewagen hangparallel gefahren, kann eine stärkere Neigungskompensation vorgesehen werden, wenn der Aufsammler bzw. dessen Pick-Up nicht in Betrieb ist, und eine schwächere Neigungskompensation vorgesehen, wenn der Aufsammler in Betrieb ist. In ähnlicher Weise kann eine stärkere Neigungskompensation vorgesehen werden, wenn der Kratzboden in Betrieb geht, und eine schwächere Neigungskompensation, wenn der Kratzboden nicht in Betrieb ist. Bei einer Ballenpresse kann eine stärkere Neigungskompensation vorgesehen werden, wenn der Wickler in Betrieb ist und/oder ein Ballen übergeben werden soll, und eine schwächere Neigungskompensation vorgesehen werden, wenn der Wickler außer Betrieb ist und kein Ballen übergeben wird und/oder der Ballenformer in Betrieb ist.

Vorteilhafterweise wird die Hangneigungsausgleichseinrichtung hierbei unter Berücksichtigung der Richtung und/oder Stärke der Hangneigung betätigt. Vorteilhafterweise können Steuermittel die Hangausgleichseinrichtung in Abhängigkeit des Signals der genannten Bestimmungseinrichtung und damit in Abhängigkeit der bestimmten Hangneigung und/oder Schrägstellung ansteuern, derart, dass eine möglichst horizontale Ausrichtung des Ballenformers und/oder des Wicklers erzielt wird. Je stärker sich das Fahrwerk aufgrund einer stärker werdenden Hangneigung neigt, desto stärker können die Neigungs-Stellaktoren gegensteuernd betätigt werden. Dabei können beispielsweise proportional zur Stärke der Hangneigung erfolgende Stellbewegungen der Neigungs-Aktoren vorgesehen werden, jedoch auch andere Umsetzungen des Neigungssensor-Signals in Stellaktor-Bewegungen vorgenommen werden. Vorzugsweise erfolgt eine stufenlose Verstellung des zumindest einen Neigungs-Stellaktors in Abhängigkeit des Neigungssensor-Signals.

Insbesondere können die genannten Steuermittel die Neigungs-Stellaktoren der Hangneigungsausgleichseinrichtung dabei derart ansteuern, dass die bestimmte Abweichung der Maschinenrahmenausrichtung gegenüber der horizontalen Ausrichtung möglichst klein wird.

Die Erfindung wird nachfolgend anhand bevorzugter Ausführungsbeispiele und zugehöriger Zeichnungen näher erläutert. In den Zeichnungen zeigen:

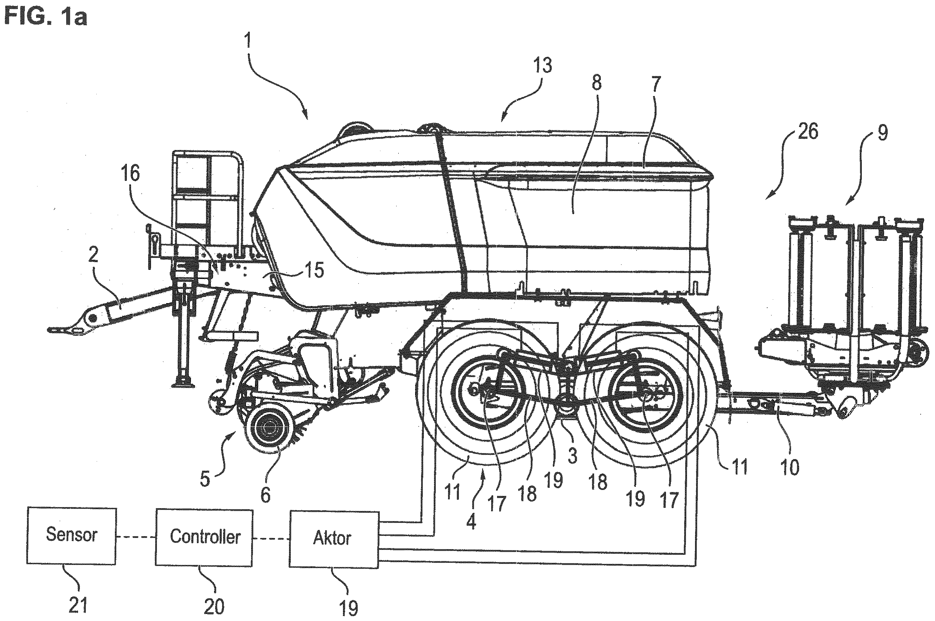

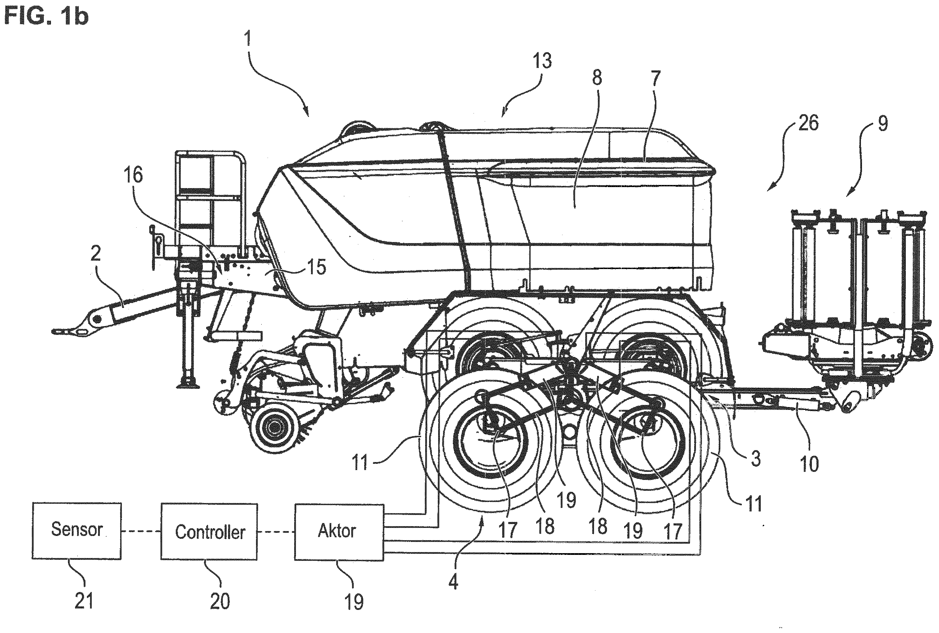

- Fig. 1:: eine schematische Seitenansicht einer Erntemaschine in Form einer Ballenpresse mit einem der Ballenformkammer des Ballenformers nachgeordneten Wickler gemäß einer vorteilhaften Ausführung der Erfindung, wobei in der Teilansicht (a) ein höhenverstellbares Bogey-Fahrwerk in einer Ausgangsstellung für das Befahren ebener Flächen und die Teilansicht (b) des Bogey-Fahrwerk in einer Hangausgleichsstellung zeigt.

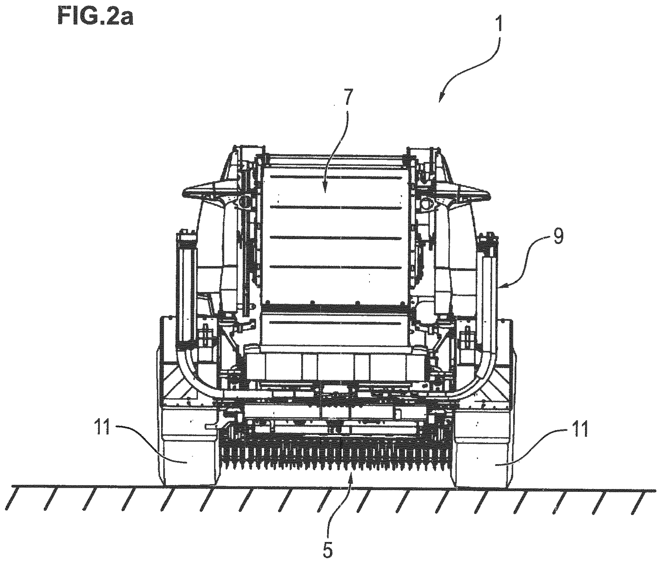

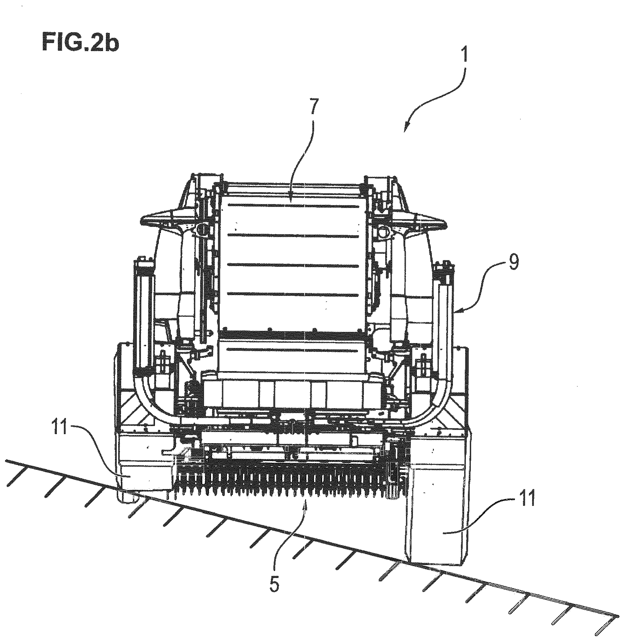

- Fig. 2:: eine schematische Rückansicht der Erntemaschine aus Fig. 1, wobei in den Teilansichten (a) und (b) das Bogey-Fahrwerk in verschiedenen Höhenstellungen für neigungsfreie Normalfahrt und für Hangneigungsausgleich gezeigt ist.

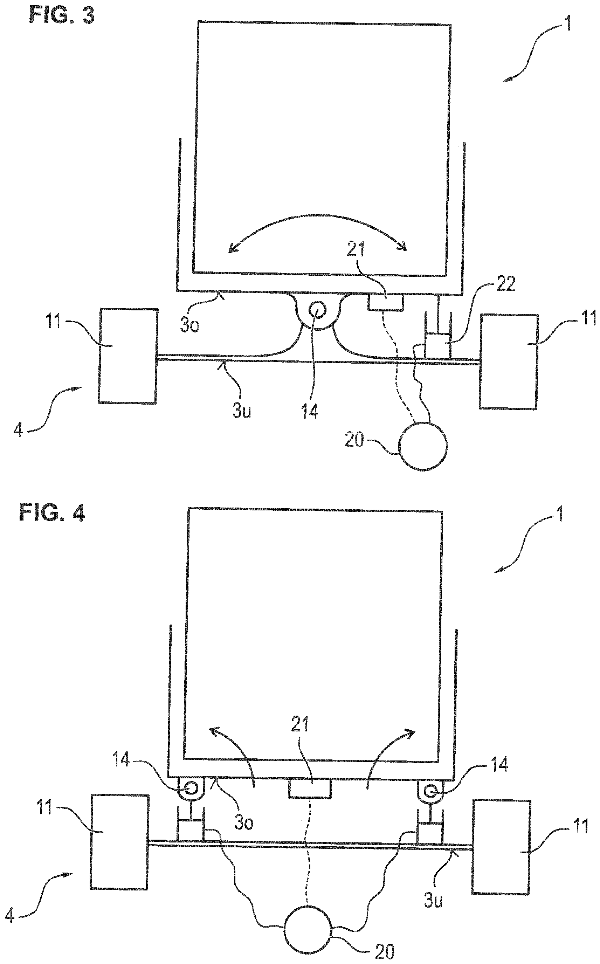

- Fig. 3:: eine schematische Rückansicht der Erntemaschine aus Fig. 1 gemäß einer alternativen Ausführung der Erfindung, bei der ein den Maschinenaufbau tragendes Chassis-Oberteil gegenüber einem Chassis-Unterteil um eine liegende, in Fahrtrichtung weisende Kippachse querverkippbar ist, und
- Fig. 4:: eine schematische Rückansicht einer Erntemaschine ähnlich den Figuren 2 und 3, wobei gemäß einer weiteren Ausführung der Erfindung ein Chassis-Oberteil, das den Ballenformer und den Wickler trägt, beidseitig rechts und links gelenkig höhenverstellbar auf einem Chassis-Unterteil abgestützt ist, um durch einseitige Höhenverstellung einen Neigungsausgleich zu erzielen.

Wie Fig. 1 zeigt, kann die Erntemaschine 1 als Anbaugerät ausgebildet sein, das an einen nicht eigens gezeigten Schlepper anbaubar ist, beispielsweise mittels einer Deichsel 2, die mit einem Maschinenrahmen 3 verbunden ist, der durch ein Fahrwerk 4 am Boden abgestützt ist.

An dem Maschinenrahmen 3 kann ein Aufsammler 5 zum Aufsammeln von Erntegut vom Boden aufgehängt sein, wobei der genannte Aufsammler 5 beispielsweise in Form einer Pickup mit einer umlaufend antreibbaren Stachelwalze und einem nachgeschalteten Förderrotor ausgebildet sein kann, um Erntegut wie Heu, Stroh oder Gras vom Boden aufzusammeln, wobei dem Förderrotor ein Schneidwerk zugeordnet sein kann. Der genannte Aufsammler 5 kann hierbei durch ein Tastfahrwerk 6 über den Boden geführt und gegenüber dem Maschinenrahmen 3 verschwenkbar sein.

Ist die Erntemaschine als Ballenpresse ausgebildet, wie dies Fig. 1 zeigt, kann das vom Aufsammler 5 vom Boden aufgesammelte Erntegut an einen Ballenformer 7 übergeben werden, der in an sich bekannter Weise eine Ballenformkammer 8 aufweisen kann, in der mittels umlaufender Riemen und/oder umlaufender Walzen hereinkommendes Erntegut zu einem Ballen geformt werden kann. Der genannte Ballenformer 7 einschließlich seiner Ballenformkammer 8 kann auf dem genannten Maschinenrahmen 3 gelagert sein.

Ist die Erntemaschine abweichend von Fig. 1 als Ladewagen ausgebildet, wird das Erntegut vom Aufsammler 5 in einen Erntegutspeicher gefördert, in dem es mittels eines Kratzbodens zum rückwärtigen Ende des Speicherraums und einer dort vorgesehenen Abladeöffnung ggf. in Verbindung mit einem Abladedosierer gefördert werden kann

Dem zuvor genannten Ballenformer 7 kann wie in Fig. 1 gezeigt ein Wickler 9 nachgeordnet sein, an den der Ballenformer 7 einen fertig geformten Ballen übergeben kann. Der genannte Wickler 9 kann den Ballen mit einem Netz, einer Folie oder einem anderen Umwicklungsmaterial umwickeln, bevor der umwickelte Ballen dann auf dem Boden abgelegt wird. Der genannte Wickler 9 kann hierzu in an sich bekannter Weise einen Wickeltisch und hier herum angeordnete Wickelwalzen aufweisen, vgl. Fig. 1.

Der genannte Wickler 9 kann vorteilhafterweise mittels eines Wickelvorrichtungsträgers 10 an dem Maschinenrahmen 3 gelagert sein, so dass der Wickler 9 und der Ballenformer 7 gemeinsamen am Maschinenrahmen 3 bzw. einem Chassisteil des Maschinenrahmens 3 gelagert sind.

Um bei Bergauf- und Bergabfahrten und Hangschrägfahrten entstehende Neigungen der Erntemaschine und deren auf dem Maschinenrahmen 3 angeordneten Aufbau im Sinne von Abweichungen gegenüber einer horizontalen Solllage ausgleichen zu können, kann der Maschinenrahmen 3 mit den daran gelagerten Funktionsaggregaten 26 in Form des Ballenformers 7 und des Wicklers 9 gegenüber der Bodenaufstandsfläche, die von den Rädern 11 des Fahrwerks 4 definiert wird, verkippt werden, was mittels einer Hangneigungsausgleichseinrichtung bewerkstelligt wird. Der Maschinenrahmen 3 mit den davon getragenen Funktionsaggregaten 26 kann hierbei mehrachsig verkippt werden, insbesondere um eine Nickneigungs-Kippachse 13, die sich liegend quer zur Fahrtrichtung erstreckt, und um eine Querneigungs-Kippachse 14, die sich liegend etwa in Fahrtrichtung erstreckt.

Um bei Bergauf- und Bergabfahrten entstehenden Hangneigungen reduzieren zu können, kann eine gegenläufige Verkippung um die genannte Nickneigungs-Kippachse 13 vorgenommen werden. Hierzu kann die genannte Deichsel 2 als Knickdeichsel ausgebildet sein, die um eine liegende, quer zur Fahrtrichtung verlaufende Knickdeichselachse 15 gegenüber dem Maschinenrahmen 3 abgeknickt werden kann, wobei dies durch einen Nickneigungsstellaktor 16 beispielsweise in Form eines an der Knickdeichsel angreifenden Druckmittelzylinders erfolgen kann. Alternativ oder zusätzlich zu der genannten Knickdeichsel kann das Fahrwerk 4 gegenüber dem Maschinenrahmen 3 höhenverstellt werden, wobei durch gleichsinnige Verstellung der rechten und linken Fahrwerkshälften ein Nicken um den Anlenkpunkt der Deichsel 2 am Schlepper herbeigeführt werden kann.

Wie Fig. 1 zeigt, kann das Fahrwerk 4 hierbei als zweiachsiges Bogey-Fahrwerk ausgebildet sein, bei dem die Radachsen 17 zweier paarweise zusammengefasster Räder 11 an schwenkbaren Achsträgern 18 aufgehängt sind. Die genannten Achsträger 18 können hierbei vorteilhafterweise um eine gemeinsame liegende Querachse schwenkbar am Maschinenrahmen 3 angelenkt sein und durch einen oder mehrere Fahrwerksstellaktor(en) 19 relativ zueinander verschwenkt werden, so dass die Räder 11 näher zusammen und weiter voneinander weg verstellt werden können, wodurch sich die Höhenlager der Räder 11 relativ zum Maschinenrahmen 3 ändert. Anstelle einer gemeinsamen Schwenkachse können die genannten Achsträger 18 auch an separaten liegenden Querachsen am Maschinenrahmen 3 angelenkt sein.

Vorteilhafterweise können die rechten und linken Fahrwerksseiten unabhängig voneinander und/oder gegenläufig zueinander höhenverstellt werden. Hierzu können die genannten Fahrwerksstellaktoren 19, die rechten und linken Seiten des genannten Bogey-Fahrwerks zugeordnet sind, von der Hangneigungsausgleichseinrichtung bzw. der dieser zugeordneten Steuervorrichtung 20 unabhängig voneinander angesteuert werden bzw. unabhängig betätigt werden, so dass wahlweise eine Fahrwerksseite oder beide Fahrwerksseiten abgesenkt oder angehoben werden kann, wie dies Fig. 2 (b) verdeutlicht. Hierdurch können Hangneigungen quer zur Fahrtrichtung ausgeglichen bzw. zumindest reduziert werden. Der Maschinenrahmen 3 sowie die darauf angeordneten Funktionsaggregaten 26 werden hierdurch gegenläufig zur Hangneigung verkippt und möglichst horizontal ausgerichtet gehalten.

Die Steuervorrichtung 20 der Hangneigungsausgleichseinrichtung kann hierbei von einem oder mehreren elektronischen Neigungssensoren 21 ein Signal erhalten, das die Hangneigung und/oder die Abweichung der Maschinenrahmenausrichtung von einer horizontalen Ausrichtung angibt. In vorteilhafter Weiterbildung der Erfindung kann der zumindest eine Neigungssensor 21 dabei mehrachsig arbeitend ausgebildet sein und/oder es können mehrere Neigungssensoren 21 zur mehrachsigen Neigungserfassung vorgesehen sein, um die Neigung des Maschinenrahmens 3 im Raum bezüglich mehrerer Achsen erfassen zu können. Insbesondere kann mittels des zumindest einen Neigungssensors eine Querneigung des Maschinenaufbaus nach rechts und links quer zur Fahrtrichtung und eine Nickneigung nach vorne und hinten in Fahrtrichtung jeweils gegenüber einer Vertikalen erfasst werden.

Insbesondere kann der elektronische Neigungssensor 21 dabei eine dielektrische Flüssigkeit enthalten, deren Lage bzw. Pegel in einem Aufnahmebehältnis kapazitiv oder induktiv erfasst werden kann. Ein solcher Neigungssensor 21 hat ein äußerst rasches Ansprechverhalten und kann auch bei holprigem Feldbetrieb verlässlich die Neigung der Erntemaschine erfassen.

In Abhängigkeit der bestimmten Neigung und/oder der bestimmten Abweichung von der horizontalen Ausrichtung kann die Steuervorrichtung 20 automatisch die Fahrwerksstellaktoren 19 und/oder den Nickneigungsstellaktor 16 für die Knickdeichsel ansteuern, um eine möglichst horizontale Ausrichtung aufrecht zu erhalten.

Wie Fig. 3 zeigt, kann alternativ oder zusätzlich zu einer Querneigungsverstellung durch Höhenverstellung der Fahrwerksseiten des Fahrwerks 4 auch eine verkippbare Lagerung des Maschinenrahmens 3 vorgesehen sein. Genauer gesagt kann ein Chassis-Oberteil 3o des Maschinenrahmens 3, an dem die Funktionsaggregate 26 befestigt sind, gegenüber einem Chassis-Unterteil 3u des Maschinenrahmens 3 um eine liegende in Fahrtrichtung weisende Querneigungskippachse 14 verkippt werden. Die genannte Querneigungskippachse 14 kann hierbei ortsfest an den beiden Chassisteilen 3o und 3u befestigt sein und sich insbesondere in einer vertikalen Längsmittelebene der Erntemaschine 1 erstrecken.

Ein Querneigungsstellaktor 22 kann das genannte Chassis-Oberteil 3o und damit die Funktionsaggregate 26 um die Querneigungskippachse 17 verkippen, wobei der genannte Querneigungsstellaktor 22 beispielsweise ein Druckmittelzylinder sein kann, der von der Kippachse 14 beabstandet zwischen die Chassis-Ober- und Unterteile geschaltet ist. Der genannte Querneigungsstellaktor 22 kann von der genannten Steuervorrichtung 20 in der beschriebenen Weise angesteuert werden, um quer zur Fahrtrichtung auftretenden Hangneigungen möglichst weitgehend auszugleichen.

Wie Fig. 4 zeigt, kann das Chassis-Oberteil 3o auch um verschiedene Querneigungs-Kippachsen 14 quer zur Fahrtrichtung verkippt werden, wobei sich die genannten mehreren Querneigungs-Kippachsen 14 von einer vertikalen Längsmittelebene der Erntemaschine 1 beabstandet erstrecken können, beispielsweise an rechten und linken Randabschnitten des Maschinenrahmens 3.

Die genannten Querneigungskippachsen 14 können hierbei vorteilhafterweise durch daran gelenkig angelenkte Querneigungsstellaktoren 22 gegenüber dem Chassis-Unterteil 3u ausgehoben werden, so dass wahlweise ein Verkippen um die linke Kippachse oder um die rechte Kippachse vorgenommen werden kann. Hierdurch kann gleichermaßen eine quer zur Fahrtrichtung gegebene Hangneigung ausgeglichen bzw. reduziert werden. Von Vorteil ist hierbei, dass es hierbei zu keiner Absenkung einer bergwärts gerichteten Maschinenrahmenseite kommt und daher Bodenfreiheitsprobleme vermieden werden.

Ist die Erntemaschine bspw. als Ladewagen ausgebildet, können die genannten mehreren Querneigungs-Kippachsen 14 sich an den seitlichen rechten und linken Randabschnitten des Maschinenrahmens bzw. den unteren seitlichen rechten und linken Randabschnitten des Erntegutspeichers erstrecken.

## Patentansprüche

1. Erntemaschine zum Anbau an einen Schlepper, mit einem Maschinenrahmen (3), der zumindest ein Funktionsaggregat (26) trägt und durch ein Fahrwerk (4) am Boden abgestützt ist, sowie zumindest einem Querneigungs-Stellaktor (19; 22) zum Verkippen des Maschinenrahmens und/oder des darauf angeordneten Funktionsaggregats (26) quer zur Fahrtrichtung um zumindest eine liegende, sich etwa in Fahrtrichtung erstreckende Querneigungs-Kippachse (14), zumindest einem elektronischen Neigungssensor (21) zum Erfassen einer Neigung des Maschinenrahmens (3) gegenüber einer horizontalen Ausrichtung, sowie einer elektronische Steuervorrichtung (20) zum Betätigen des zumindest einen Querneigungs-Stellaktors (19; 22) in Abhängigkeit der von dem elektronischen Neigungssensor (21) erfassten Neigung des Maschinenrahmens (3) derart, dass die Neigung des Maschinenrahmens (3) zusammen mit dem darauf angeordneten Funktionsaggregat (26) gegenüber der genannten horizontalen Ausrichtung möglichst reduziert wird, wobei die Steuervorrichtung (20) mit einer Betriebszustands-Erfassungeinrichtung zum Erfassen zumindest eines Betriebszustandsparameters des zumindest einen Funktionsaggregats (26) verbunden ist, **dadurch gekennzeichnet, dass** die Betriebszustands-Erfassungeinrichtung zum Erfassen, ob ein Aufsammler zum Aufsammeln von Erntegut arbeitet, ausgebildet ist und die Steuervorrichtung (20) Steuermittel zum Steuern des zumindest einen Querneigungs-Stellaktors (19; 22) in Abhängigkeit des erfassten Betriebszustands des Aufsammlers aufweist.

2. Erntemaschine nach dem vorhergehenden Anspruch, wobei der zumindest eine Neigungssensor (21) zweiachsig arbeitend ausgebildet und derart angeordnet ist, dass eine Querneigung des Maschinenrahmens (3) nach rechts und links quer zur Fahrtrichtung und eine Nickneigung nach vorne und hinten in Fahrtrichtung jeweils gegenüber einer Vertikalen erfassbar ist.

3. Erntemaschine nach Anspruch 1, wobei der zumindest eine Neigungssensor (21) einachsig arbeitend ausgebildet und derart angeordnet ist, dass eine Querneigung des Maschinenrahmens (3) nach rechts und links quer zur Fahrtrichtung gegenüber einer Vertikalen erfassbar ist.

4. Erntemaschine nach einem der vorhergehenden Ansprüche, wobei zumindest ein Nickneigungs-Stellaktor (16; 19) zum Verkippen des Maschinenrahmens und/oder des darauf angeordneten Funktionsaggregats (26) um eine liegende, sich quer zur Fahrtrichtung erstreckende Nickneigungs-Kippachse (13) vorgesehen ist.

5. Erntemaschine nach einem der vorhergehenden Ansprüche, wobei der Querneigungs-Stellaktor (19; 22) derart angeordnet, dass ein gemeinsames Verkippen aller auf dem Maschinenrahmen (3) starr angeordneten bzw. daran befestigten Funtionsaggregate (26) erfolgt.

6. Erntemaschine nach einem der vorhergehenden Ansprüche, wobei eine Steuervorrichtung (20) einen Regler zum automatischen Steuern des Querneigungs-Stellaktors (19; 22) aufweist derart, dass der Neigungssensor (21) eine möglichst kleine Winkelabweichung des Maschinenrahmens (3) von einer Sollausrichtung entsprechend einem Aufstehen der Erntemaschine auf einer horizontalen Bodenfläche anzeigt.

7. Erntemaschine nach einem der vorhergehenden Ansprüche, wobei die Betriebszustands-Erfassungeinrichtung zum Erfassen, ob eine Ballenübergabe von einem Ballenformer (7) an einen Wickler (9) erfolgt, und/oder ob ein Ballenwickelvorganges erfolgt, und/oder ob der genannte Ballenformer (7) noch keinen Ballen auswirft und/oder sich noch nicht dem Ende eines Ballenformzyklus nähert, und/oder ob ein Kratzboden läuft, und/oder ob ein Abladedosierer läuft, ausgebildet ist.

8. Erntemaschine nach einem der beiden vorhergehenden Ansprüche, wobei die Steuervorrichtung (20) in Abhängigkeit des zumindest einen Betriebszustandsparameters die Betätigung des zumindest einen Querneigungs-Stellaktors (19; 22) auf eine zeiltich limitertes Zeitfenster begrenzt.

9. Erntemaschine nach einem der vorhergehenden Ansprüche 7 bis 9, wobei die Steuervorrichtung (20) in Abhängigkeit des zumindest einen Betriebszustandsparameters die Betätigung des zumindest einen Querneigungs-Stellaktors (19; 22) verstärkt oder abschwächt.

10. Erntemaschine nach einem der vorhergehenden Ansprüche, wobei der zumindest eine Querneigungs-Stellaktor (19; 22) stufenlos arbeitend ausgebildet ist und die Steuervorrichtung (20) den Querneigungs-Stellaktor in Abhängigkeit des Signals des Neigungssensors (21) stufenlos, insbesondere proportional, ansteuert.

11. Erntemaschine nach einem der vorhergehenden Ansprüche, wobei das Fahrwerk (4) gegenüber einem Chassisteil (3o), an dem das zumindest eine Funktionsaggregat (26) gelagert ist, höhenverstellbar ausgebildet ist, wobei rechte und linke Fahrwerksteile unabhängig voneinander und/oder gegenläufig zueinander höheneinstellbar ausgebildet und von der Steuervorrichtung (20) in Abhängigkeit der erfassten Neigung wahlweise unabhängig voneinander und/oder gegenläufig zueinander und/oder gleichläufig ansteuerbar sind, wobei das Fahrwerk (4) vorzugsweise als verstellbares Bogey-Fahrwerk ausgebildet ist und Fahrwerksstellaktoren (19) zum Verstellen der Achsträger (18) des Bogey-Fahrwerks QuerneigungsStellaktoren bilden.

12. Erntemaschine nach einem der vorhergehenden Ansprüche, wobei ein Chassis-Oberteil (3o) des Maschinenrahmens (3) gegenüber einem vom Fahrwerk (4) getragenen Chassis-Unterteil (3u) verkippbar gelagert ist, wobei das Chassisoberteil (3o) vorzugsweise um eine fest an dem Chassis-Unterteil (3u), das vom Fahrwerk (4) getragen wird, mittig angeordnete Querneigungskippachse (14) verkippbar gelagert ist und zumindest ein Querneigungs-Stellaktor (22) von der genannten Querneigungskippachse (14) beabstandet angeordnet ist.

13. Erntemaschine nach einem der vorhergehenden Ansprüche, wobei der Maschinenrahmen (3) und/oder ein das Funktionsaggregat (26) tragendes Chassis-Oberteil (3o) an zwei voneinander beabstandeten, außermittig angeordneten, liegenden etwa in Fahrtrichtung weisenden Querneigungs-Kippachsen (14) gelagert ist, welche Querneigungskippachsen (14) gegenüber einem vom Fahrwerk (4) getragenen Chassis-Unterteil (3u) höhenverstellbar sind.

## Claims

1. Harvester for attachment to a tractor, comprising a machine frame (3) that carries at least one functional unit (26) and is supported on the ground (23) by an undercarriage (4), and at least one transverse inclination adjustment actuator (19; 22) for tilting the machine frame and/or the functional unit (26) arranged thereon transversely to the direction of travel, about at least one horizontal transverse inclination tilt axle (14) that extends approximately in the direction of travel, at least one electronic inclination sensor (21) for detecting an inclination of the machine frame (3) relative to a horizontal orientation, and an electronic control device (20) for activating the at least one transverse inclination adjustment actuator (19; 22) depending on the inclination of the machine frame (3) detected by the electronic inclination sensor (21), such that the inclination of the machine frame (3), together with the functional unit (26) arranged thereon, relative to said horizontal orientation is reduced as much as possible, wherein the control device (20) is connected to an operating state detection means for detecting at least one operating state parameter of the at least one functional unit (26), **characterized in that** the operating state detection means is configured for detecting whether a collector for picking up the harvested material is operating, and the control device (20) comprises control means for controlling the at least one transverse inclination actuator (19; 22) on the basis of the detected operating state of the collector.

2. Harvester according to the preceding claim, wherein the at least one inclination sensor (21) is configured to operate biaxially and is arranged such that it is possible to detect a transverse inclination of the machine frame (3) to the right and left, transversely to the direction of travel, and a pitch inclination to the front and rear, in the direction of travel, relative to a vertical in each case.

3. Harvester according to claim 1, wherein the at least one inclination sensor (21) is configured to operate uniaxially and is arranged such that it is possible to detect a transverse inclination of the machine frame (3) to the right and left, transversely to the direction of travel, relative to a vertical.

4. Harvester according to any of the preceding claims, wherein at least one pitch inclination adjustment actuator (16; 19) is provided, for tilting the machine frame and/or the functional unit (26) arranged thereon about a horizontal pitch inclination tilt axle (13) that extends transversely to the direction of travel.

5. Harvester according to any of the preceding claims, wherein the transverse inclination adjustment actuator (19; 22) is arranged such that all of the functional units (26) that are rigidly arranged on or fastened to the machine frame (3) are tilted together.

6. Harvester according to any of the preceding claims, wherein a control device (20) comprises a regulator for automatically controlling the transverse inclination actuator (19; 22) such that the inclination sensor (21) indicates as small an angular deviation as possible of the machine frame (3) from a target orientation with respect to the harvester in contact on to a horizontal ground surface.

7. Harvester according to any of the preceding claims, wherein the operating state detection means is configured for detecting whether a bale transfer from a bale former (7) to a wrapper (9) is taking place, and/or whether a bale winding process is taking place, and/or whether said bale former (7) is not yet ejecting bales and/or is not yet approaching the end of a bale forming cycle, and/or whether a scraper floor is operating, and/or whether an unloading dosing device is operating.

8. Harvester according to one of the two preceding claims, wherein the control device (20) restricts the activation of the at least one transverse inclination adjustment actuator (19; 22) to a temporally limited time window, on the basis of the at least one operating state parameter.

9. Harvester according to any of the preceding claims 7 to 9, wherein the control device (20) increases or lessens the activation of the at least one transverse inclination adjustment actuator (19; 22), on the basis of the at least one operating state parameter.

10. Harvester according to any of the preceding claims, wherein the at least one transverse inclination adjustment actuator (19; 22) is configured to operate in a stepless manner, and the control device (20) actuates the transverse inclination adjustment actuator in a stepless, in particular proportional, manner, on the basis of the signal of the inclination sensor (21).

11. Harvester according to any of the preceding claims, wherein the undercarriage (4) is configured so as to be height-adjustable relative to a chassis part (30) on which the at least one functional unit (26) is mounted, wherein right-hand and left-hand undercarriage parts are configured so as to be height-adjustable in a mutually independent and/or mutually opposing manner, and can be selectively actuated by the control device (20) in a mutually independent and/or mutually opposing manner and/or synchronously, on the basis of the detected inclination, wherein the undercarriage (4) is preferably configured as an adjustable bogey undercarriage and undercarriage adjustment actuators (19) for adjusting the axle carriers (18) of the bogey undercarriage form transverse inclination adjustment actuators.

12. Harvester according to any of the preceding claims, wherein a chassis upper part (3o) of the machine frame (3) is mounted so as to be tiltable relative to a chassis lower part (3u) that is carried by the undercarriage (4), wherein the chassis upper part (3o) is preferably mounted so as to be tiltable about a central transverse inclination tilt axle (14) that is rigidly arranged on the chassis lower part (3u) that is carried by the undercarriage (4), and at least one transverse inclination adjustment actuator (22) is arranged so as to be spaced apart from said transverse inclination tilt axle (14).

13. Harvester according to any of the preceding claims, wherein the machine frame (3) and/or a chassis upper part (3o) that carries the functional unit (26) is mounted on two mutually spaced, off-center, transverse inclination tilt axles (14) that point approximately in the direction of travel, the height of which transverse inclination tilt axles (14) is adjustable relative to a chassis lower part (3u) that is carried by the undercarriage (4).

## Revendications

1. Moissonneuse destinée à être attelée à un tracteur, comprenant un cadre de machine (3), qui supporte au moins un ensemble fonctionnel (26) et qui est supporté au sol par un mécanisme de déplacement (4), ainsi qu'au moins un actionneur de réglage d'inclinaison transversale (19 ; 22) destiné à basculer le cadre de machine et/ou l'ensemble fonctionnel (26) disposé sur celui-ci transversalement au sens de la marche sur au moins un axe de basculement d'inclinaison transversale (14) horizontal s'étendant approximativement dans le sens de la marche, au moins un capteur d'inclinaison (21) électronique destiné à détecter une inclinaison du cadre de machine (3) par rapport à un alignement horizontal, ainsi qu'un dispositif de commande (20) électronique destiné à actionner l'au moins un actionneur de réglage d'inclinaison transversale (19 ; 22) en fonction de l'inclinaison du cadre de machine (3) détectée par le capteur d'inclinaison (21) électronique de telle manière que l'inclinaison du cadre de machine (3) avec l'ensemble fonctionnel (26) disposé sur celui-ci est réduite le plus possible par rapport audit alignement horizontal, le dispositif de commande (20) étant relié à un appareil de détection d'état de fonctionnement destiné à détecter au moins un paramètre d'état de fonctionnement de l'au moins un ensemble fonctionnel (26), **caractérisée en ce que** l'appareil de détection d'état de fonctionnement est conçu pour détecter si un ramasseur destiné à ramasser la récolte est en marche et le dispositif de commande (20) comporte des moyens de commande destinés à commander l'au moins un actionneur de réglage d'inclinaison transversale (19 ; 22) en fonction de l'état de fonctionnement détecté du ramasseur.

2. Moissonneuse selon la revendication précédente, dans laquelle l'au moins un capteur d'inclinaison (21) est réalisé fonctionnant sur deux axes et est disposé de telle manière qu'une inclinaison transversale du cadre de machine (3) vers la droite et vers la gauche transversalement au sens de la marche et une inclinaison de tangage vers l'avant et vers l'arrière dans le sens de la marche peuvent respectivement être détectées par rapport à une verticale.

3. Moissonneuse selon la revendication 1, dans laquelle l'au moins un capteur d'inclinaison (21) est réalisé fonctionnant sur un axe et est disposé de telle manière qu'une inclinaison transversale du cadre de machine (3) vers la droite et vers la gauche transversalement au sens de la marche peut être détectée par rapport à une verticale.

4. Moissonneuse selon l'une des revendications précédentes, dans laquelle au moins un actionneur de réglage d'inclinaison de tangage (16 ; 19) est prévu pour basculer le cadre de machine et/ou l'ensemble fonctionnel (26) disposé sur celui-ci sur un axe de basculement d'inclinaison de tangage (13) horizontal s'étendant transversalement au sens de la marche.

5. Moissonneuse selon l'une des revendications précédentes, dans laquelle l'actionneur de réglage d'inclinaison transversale (19 ; 22) est disposé de telle manière qu'un basculement commun de tous les ensembles fonctionnels (20) disposés de manière rigide sur le cadre de machine (3) ou fixés à celui-ci est effectué.

6. Moissonneuse selon l'une des revendications précédentes, dans laquelle un dispositif de commande (20) comporte un régulateur destiné à commander automatiquement l'actionneur de réglage d'inclinaison transversale (19 ; 22) de telle manière que le capteur d'inclinaison (21) affiche un écart angulaire le plus faible possible du cadre de machine (3) par rapport à un alignement de consigne correspondant à une position de la moissonneuse sur une surface de sol horizontale.

7. Moissonneuse selon l'une des revendications précédentes, dans laquelle l'appareil de détection d'état de fonctionnement est conçu pour détecter si un transfert de balle d'une botteleuse (7) à une enrouleuse (9) est effectué et/ou si un procédé d'enroulement de balle est effectué et/ou si ladite botteleuse (7) n'éjecte pas encore de balle et/ou n'approche toujours pas de la fin d'un cycle de formation de balle et/ou si un fond mouvant à traverse est en marche et/ou si un dispositif de dosage de déchargement est en marche.

8. Moissonneuse selon l'une des deux revendications précédentes, dans laquelle le dispositif de commande (20) limite l'actionnement de l'au moins un actionneur de réglage d'inclinaison transversale (19 ; 22) à une fenêtre temporelle limitée dans le temps en fonction de l'au moins un paramètre d'état de fonctionnement.

9. Moissonneuse selon l'une des revendications précédentes 7 à 9, dans laquelle le dispositif de commande (20) renforce ou diminue l'actionnement de l'au moins un actionneur de réglage d'inclinaison transversale (19 ; 22) en fonction de l'au moins un paramètre d'état de fonctionnement.

10. Moissonneuse selon l'une des revendications précédentes, dans laquelle l'au moins un actionneur de réglage d'inclinaison transversale (19 ; 22) est réalisé fonctionnant sans palier et le dispositif de commande (20) commande l'actionneur de réglage d'inclinaison transversale sans palier, en particulier de manière proportionnelle, en fonction du signal du capteur d'inclinaison (21).

11. Moissonneuse selon l'une des revendications précédentes, dans laquelle le mécanisme de déplacement (4) est réalisé réglable en hauteur par rapport à une partie de châssis (3o) sur laquelle est monté l'au moins un ensemble fonctionnel (26), des parties droite et gauche du mécanisme de déplacement étant réalisées réglables en hauteur indépendamment l'une de l'autre et/ou dans le sens opposé l'une par rapport à l'autre et pouvant être commandées par le dispositif de commande (20) en fonction de l'inclinaison détectée au choix indépendamment l'une de l'autre et/ou dans le sens opposé l'une par rapport à l'autre et/ou dans le même sens, le mécanisme de déplacement (4) étant réalisé de préférence sous la forme d'un mécanisme de déplacement à bogie et des actionneurs de réglage de mécanisme de déplacement (19) pour régler le support d'essieu (18) du mécanisme de déplacement à bogie formant des actionneurs de réglage d'inclinaison transversale.

12. Moissonneuse selon l'une des revendications précédentes, dans laquelle une partie supérieure de châssis (3o) du cadre de machine (3) est montée de manière à pouvoir basculer par rapport à une partie inférieure de châssis (3u) supportée par le mécanisme de déplacement (4), la partie supérieure de châssis (3o) étant montée de préférence de manière à pouvoir basculer sur un axe de basculement d'inclinaison transversale (14) disposé fixement dans une position centrale sur la partie inférieure de châssis (3u), qui est supportée par le mécanisme de déplacement (4), et au moins un actionneur de réglage d'inclinaison transversale (22) étant disposé espacé dudit axe de basculement d'inclinaison transversale (14).

13. Moissonneuse selon l'une des revendications précédentes, dans laquelle le cadre de machine (3) et/ou une partie supérieure de châssis (3o) supportant l'ensemble fonctionnel (26) est monté(e) sur deux axes de basculement d'inclinaison transversale (14) horizontaux, espacés l'un de l'autre, disposés dans une position autre que centrale et orientés approximativement dans le sens de la marche, lesdits axes de basculement d'inclinaison transversale (14) pouvant être réglés en hauteur par rapport à une partie inférieure de châssis (3u) supportée par le mécanisme de déplacement (4).
